# EUROPEAN PATENT APPLICATION

(11) **EP 2 261 926 A1**
(43) Date of publication of application: **15.12.2010**
(21) Application number: 10164375.7
(22) Date of filing: 28.05.2010
(51) Int. Cl.: G11B 27/34, G11B 19/02, G06F 3/048, G06F 17/30, H04S 3/00

(54) **Spatial audio enhanced user interface for browsing a list of items**

(30) Priority: 01.06.2009 US 476194
(71) Applicant: 3D Labs Inc., Ltd., Hamilton (BM)
(72) Inventor: Leslie, Ben, London, SE26 4AL (GB); Derbyshire, Arran, Newton Abbot, TQ13 7DU (GB)
(74) Representative: Talbot-Ponsonby, Daniel Frederick

(57) **Abstract**

Embodiments of the present invention pertain to, but are not limited to, browsing a displayed listing of stored audio content such as music in a music player, PC, or portable electronic device, including MP3 players and mobile phones. Various embodiments of the present invention recognize that to improve the user's browsing experience, the user's selections from the listing should be accompanied by audio effects specifically configured to facilitate the corresponding content navigation. For example, the effects could be that as the currently selected item in the listing changes, an excerpt of the music track (or of a member of the group of music tracks) in the new item (i.e., "new currently-selected" item) in the listing is played with 3D audio effects such that the position from which the music track appears to be playing is in symphony with the new item's movement on the user interface.

## Description

The present invention relates to user interfaces (e.g., graphical user interfaces). More particularly, the present invention relates to associating spatial audio with visual items in user interfaces.

It is becoming more and more common to display items such as digital photographs, videos, or music files on an electronic device (such as a personal digital entertainment device) or a PC. As the number of items for display increases or the area for display decreases, the need arises for a means to effectively browse the list of displayed items for a particular item.

Some methods and user interfaces have already been proposed. However, there is a need for a method which provides quicker and easier browsing for a user and which also allows the user to easily locate and confirm the selection of a particular item from the list of displayed items even if he or she cannot remember in full the details of that item.

It is an object of the present invention to provide a method for browsing items in a listing which provides an improvement over known methods. It is a further object of the invention to provide a user interface for browsing items in a listing which provides an improvement over known user interfaces. The use of spatial audio in a browsing context is generally provided.

An aspect of the invention provides a system for browsing multiple items associated with a listing. The system includes a display; multiple speakers; an input device operable by a user; memory; and a processor coupled to the display, the multiple speakers, the input device, and the memory. The processor is operable to: identify with a focus area within a window on the display a first item from the multiple items as a current selection; identify with a visual cue within the window on the display a second item from the multiple items as a new current selection; and upon identification of the new current selection, cause the first item to move away from the focus area and the second item to move towards the focus area. The movement of the second item is accompanied by placement of a corresponding audio clip in virtual space via the multiple speakers.

Embodiments of the invention include having the placement of the corresponding audio clip for the second item in virtual space. Similarly, some embodiments include having the movement of the first item accompanied by placement of a corresponding audio clip in virtual space via the multiple speakers.

Placement of the corresponding audio clip for the first and/or second item(s) in virtual space can be implemented by using either stereo or multi-channel panning. Further, placement of the corresponding audio clip for the first and/or second item(s) in virtual space can be done by using 3D audio.

Another aspect of the invention provides a method for browsing multiple items associated with a listing. The multiple items are positioned on a display. The method includes: identifying with a focus area on the display a first item from the multiple items as a current selection; identifying with a visual cue on the display a second item from the multiple items as a new current selection; and upon identifying the new current selection, moving away the first item from the focus area and moving the second item towards the focus area. The moving of the second item is accompanied by placing a corresponding audio clip in virtual space.

Yet another aspect of the invention provides a method for browsing a plurality of items associated with a listing. The multiple items are positioned on a display. The method includes: identifying with a focus area on the display a first item from the multiple items as a current selection; identifying with a visual cue on the display a second item from the multiple items as a new current selection; and upon identifying the new current selection, placing a corresponding audio clip of the second item in virtual space. An embodiment includes having the focus area being the same as the visual cue and operable to move among the multiple items.

An advantage of the present invention is that a user can be reminded of the contents of an item when the item's description/image in a listing is not sufficient to convey enough information to the user about the item. For example, in the music browsing context, the user may not remember what the contents of the album include by just looking at the album cover image from the listing on the display. However, by selectively playing associated audio (e.g., a sample track from the album) with the visual image of the album cover, the user is provided with more information to help remember the contents of the album. In addition, by implementing spatial audio to the playing of the associated audio, the user is provided with better confirmation of his selection. Also, by coordinating the spatial audio with movement of the visual image on the display, the user is provided with a more impressive confirmation of his selection. Accordingly, the user's browsing experience is greatly improved.

Further, reinforcing two dimensional (2D) or three dimensional (3D) images on user interfaces with audio allows more information to be provided by smaller display screens. 3D audio can fill the entire space around a user and not just the space on the display screen to help reinforce a user's selection and make more impressive to the user of items associated with a listing. Furthermore, the present invention can enable browsing of a music library when the display screen is not visible, or for a visually impaired person.

Features which are described in relation to one aspect of the invention may also be applicable to another aspect of the invention. These and other features and advantages of the present invention are described below with reference to the drawings.

Some embodiments of the invention will now be described be way of example only and with reference to the accompanying figures, of which:
Figure 1A is a diagram of an audio-enhanced user interface with items positioned in a 3D format;
Figure 1B is a diagram of an audio-enhanced user interface with items positioned in a perspective view matrix format;
Figure 2A is a diagram of an audio-enhanced user interface with items positioned in a flat matrix format;
Figure 2B is a diagram of an audio-enhanced user interface with items positioned in a horizontal sliding format;
Figure 3 is a flow diagram of browsing with an audio-enhanced user interface;
Figure 4 is a flow diagram of playing media with an audio-enhanced user interface;
Figure 5 is a system suitable for use to implement the audio-enhanced interface;
Figure 6 illustrates components within the system of Figure 5.

Reference will now be made in detail to preferred embodiments of the invention. Examples of the preferred embodiments are illustrated in the accompanying drawings. While the invention will be described in conjunction with these preferred embodiments, it will be understood that it is not intended to limit the invention to such preferred embodiments. On the contrary, it is intended to cover alternatives, modifications, and equivalents as may be included within the spirit and scope of the invention as defined by the appended claims. In the following description, numerous specific details are set forth in order to provide a thorough understanding of the present invention. The present invention may be practiced without some or all of these specific details. In other instances, well known mechanisms have not been described in detail in order not to unnecessarily obscure the present invention.

The invention can be implemented in numerous ways, including as a process, an apparatus, a system, a computer readable medium such as a computer readable storage medium or a computer network wherein program instructions are sent over optical or electronic communication links. In this specification, these implementations, or any other form that the invention may take, may be referred to as techniques. In general, the order of the steps of disclosed processes may be altered within the scope of the invention.

It should be noted herein that throughout the various drawings, like numerals refer to like parts. The various drawings illustrated and described herein are used to illustrate various features of the invention. To the extent that a particular feature is illustrated in one drawing and not another, except where otherwise indicated or where the structure inherently prohibits incorporation of the feature, it is to be understood that those features may be adapted to be included in the embodiments represented in the other figures, as if they were fully illustrated in those figures. Unless otherwise indicated, the drawings are not necessarily to scale.

Embodiments of the present invention pertain to, but are not limited to, the browsing of stored audio content such as music in a music player, PC, or portable electronic device, including MP3 players and mobile phones. In such players, audio tracks are presented for browsing in a variety of ways such as being grouped by artist, album, genre, or as a group of individual tracks. These groups of tracks are typically represented by graphical images, and may appear in a vertical listing, horizontal listing, or a matrix listing. The graphical images may be album art. As the user browses these groups or tracks, there will generally be a "currently-selected" item that denotes the currently selected groups or tracks being accessed for playback. As the user uses the user interface to move on to the next item, there will generally be a "new currently-selected" item and a corresponding visual cue (e.g., a cursor, a mouse pointer, a selection box, intermittent flashing of the item, a highlight for the item, etc.). In general, the visual cue identifies an item on the display and facilitates the user in selecting the "new currently-selected" item. The movement of the visual cue can be controlled by a user with a user input device (e.g., toggle switch).

Various embodiments of the present invention recognize that to improve the user's browsing experience, the user's selections should be accompanied by audio effects specifically configured to facilitate the corresponding content navigation. For example, the effects could be that as the currently selected item changes, an excerpt of the track (or of a member of the group of tracks) in the new item (i.e., "new currently-selected" item) is played with 3D audio effects such that the position from which the track appears to be playing is in symphony with the new item's movement on the user interface. In general 3D audio effects are sound effects that attempt to broaden the stereo effect image produced by speakers (e.g., two loudspeakers, stereo headphones), or to create the impression of sound sources placed anywhere in three dimensional space, including behind, above, or below a reference (e.g., listener, user). Typically, in accordance to aspects of the invention, the output of 3D audio sound is coordinated with the item's location such that the volume and placement of the virtual sound are adjusted to the visual moving of the item on the display.

According to various embodiments, the image in the current selection transitions away as the image in the new current selection transitions into the current selection. While the images are transitioning, one or more audio clips are played. Generally, the transitions of the images for both the current selection and the new current selection can be enhanced with the fading of their respective audio clips. For instance, as the image in the new current selection moves closer to the current selection, the corresponding audio clip becomes louder. Additionally, as the image in the current selection moves away from the current selection, its corresponding audio clip becomes softer. According to a preferred embodiment, the audio clip corresponding to the image in the new current selection is played and the audio clip corresponding to the image in the current selection is stopped as soon as the new current selection is made.

In this fashion, the user receives audible feedback that can supplement or substitute for the visual display. This feedback can take the form of sonified information about the specific track selected and audible confirmation that the user intended action either was or was not taken. For example, sonification of a moving item from the left to the centre would indicate that the left album stack was selected.

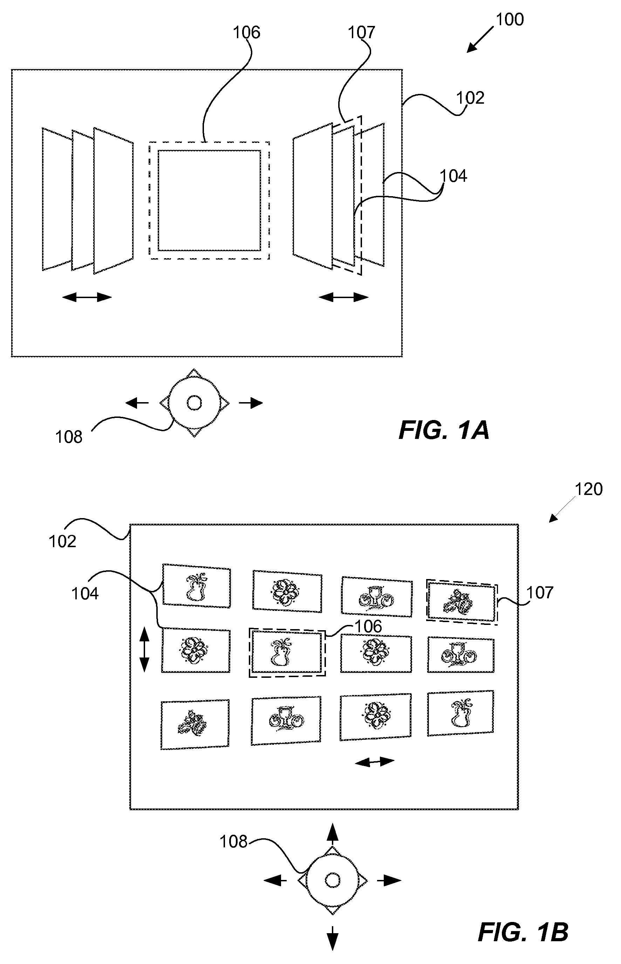

To further elaborate, Figure 1A is a diagram of an audio-enhanced user interface with items (e.g., represented by images, icons, or text) positioned in a 3D format. User interface 100 is configured to facilitate a user to browse multiple items 104 (e.g., audio tracks, video, graphical icons or images, albums, files) associated with a listing (e.g., media playlist, file directory, media collection, image listing, etc.). User interface 100 includes a focus area 106 within a window 102 of a display (e.g., screens of a media player, personal digital assistant, computing device, mobile phone, portable electronic device, etc.). Focus area 106 is configured to identify a first item 104 as a current selection. User interface 100 also includes a visual cue 107 within window 102 of the display. Visual cue 107 is configured to identify a second item 104 as a new current selection.

The current selection and new current selection can be configured for any browsing purpose including, but not limited to, access, playback, or viewing the corresponding item. Upon identification of the new current selection, the first item moves away from focus area 106 and the second item moves towards focus area 106. In a preferred embodiment, the first item moves from inside the focus area to outside the focus area whereas the second item moves from outside the focus area to inside the focus area. The movement of the first and second items may cause the rest of the items to move in a synchronized manner so that all the items maintain their respective order/position with one another. Alternatively, only the first and second items may switch their positions (e.g., with each other) in the user interface.

Movement of the second item can be accompanied by placement of a corresponding audio clip in virtual space via a plurality of speakers (e.g., headphones, loudspeakers, speaker drivers, etc.). Similarly, movement of the first item can be accompanied by placement of a corresponding audio clip in virtual space via the plurality of speakers. In general, the placement of the corresponding audio clip for the first and/or second item in virtual space reflects the real-time, instantaneous, moving, and/or time-delayed position of the first and/or second item relative to a fixed or moving reference (e.g., focus area 106, another item 104, user position, etc.).

Placement of the corresponding audio clip for the first and/or second item in virtual space can be implemented using any known technique, such as those disclosed in U.S. Patent Nos.: US 5,943,427 or US 6,577,736. For example, 3D audio, stereo, or multi-channel panning techniques may be used. Accordingly, embodiments of the present invention provide improved confirmation/reinforcement of the user's selection, more information (particularly conveying movement of the new selected item relative to a reference) to the user, and an enhanced user interface for small displays.

Focus area 106 can be positioned anywhere in window 102. In Figure 1A, focus area 106 is fixedly positioned at a centre position within window 102 of the display. Alternatively, as noted earlier, focus area 106 can move. Similarly, items 104 can be positioned anywhere and arranged in any way in window 102. In Figure 1A, items 104 are shown positioned horizontally in window 102. Alternatively, items 104 can be positioned vertically or both horizontally and vertically in window 102. Moreover, two or more items 104 can be positioned in a 3D format. For example, as shown in Figure 1A, items 104 are positioned at an angle to and on each side of focus area 106, which identifies a currently selected item 104. Also, the listing of items 104 can be completely displayed or partially displayed as items 104 are browsed by the user.

Visual cue 107 is configured to move to any item 104 and facilitate selection of the item as the new current selection. The movement of the visual cue is controllable via an input device 108 (e.g., keyboard, mouse, touch sensitive mechanism such as a touch pad, selector switch, toggle switch, slider, etc.). According to a preferred embodiment, input device 108 is operable by the user to control the movement of visual cue 107 and to select any of items 104 as the new current selection. As shown in Figure 1A, input device 108 is operable to toggle between left and right buttons/positions in moving visual cue 107 left and right respectively between items 104 in window 102. Further, input device 108 can be configured to receive a user's selection of an item (e.g., upon having a button depressed while the visual cue is engaged with the item).

Figure 1B is a diagram of an audio-enhanced user interface 120 with items 104 positioned in a perspective view matrix format. User interface 120 is configured to browse multiple items 104 associated with a listing. User interface 100 includes a focus area 106 within a window 102 of a display (e.g., screens of a media player, personal digital assistant, computing device, mobile phones, or portable electronic device). Focus area 106 is configured to identify a first item 104 as a current selection. User interface 120 also includes a visual cue 107 within window 102 of the display. Visual cue 107 is configured to identify a second item 104 as a new current selection. Visual cue 107 is controllable with an input device 108 that is operable by the user. Upon identification of the new current selection, the first item moves away from focus area 106 and the second item moves towards focus area 106 where the second item replaces the first item in focus area 106. The movement of the first and second items may cause the rest of the items to move in a synchronized manner so that all the items maintain their respective positions with one another. Alternatively, only the first and second items may switch their positions (e.g., with each other) in the user interface.

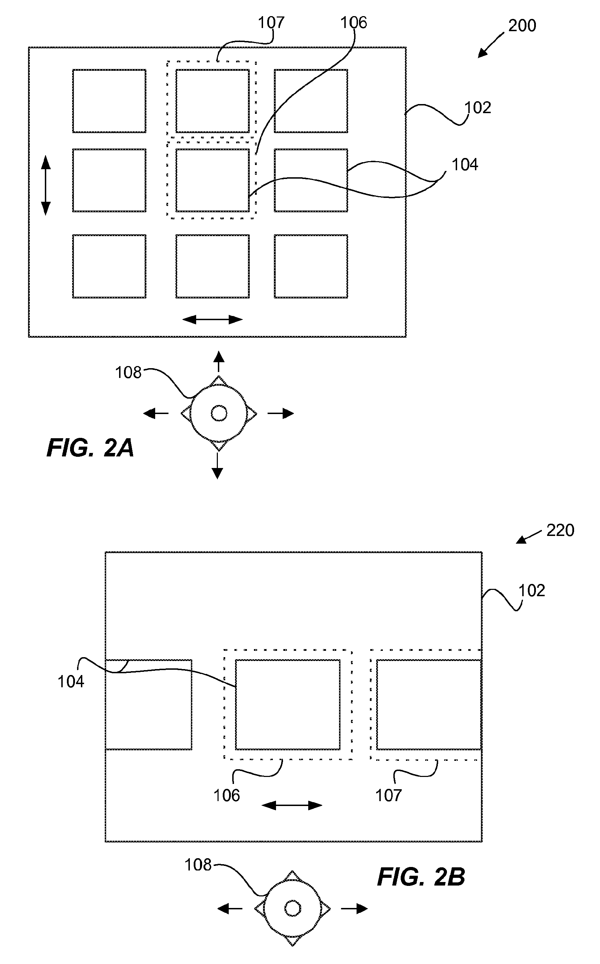

Figure 2A is a diagram of an audio-enhanced user interface 200 with items positioned in a flat matrix format. As shown, window 102 includes a matrix of nine items 104 with a currently selected item within focus area 106, which is located at the centre of the matrix/window 102. The matrix can be of any size and portion for display in window 102.

Input device 108 (e.g., toggle switch) allows shifting the entire matrix in various directions, including up, down, left, and right directions, and automatically selecting an item for audio/video playback. The automatic selection of the item is coordinated with a visual cue 107 and user input device 108. As the matrix shifts, some columns or rows of items may disappear from window 102 while other columns or rows of items may appear in window 102.

For example, if input device 108 initiates a right command (e.g., user depressing a right button of the toggle switch), then the whole field of items moves to the left and the sound associated with the right item ("automatic" new current selection) appears to move from the right to centre. The most left column of items disappears whereas a new column of items appears where the most right column used to be. For another example, if input device 108 initiates an up command (e.g., user depressing an up button of the toggle switch), then the whole field of items moves down and the sound associated with the top item (new current selection) appears to move from above to centre. The most bottom row of items disappears whereas a new row of items appears where the most top row used to be. It should be noted that in various embodiments, focus area 106 remains in the centre of the window. Yet, in other embodiments, the matrix remains static and the focus area 106 moves about within it

Accordingly, another advantage of the system described is that a user's selection can be confirmed not only by combining virtual sound with a visually selected item, but also by coordinating the playback of the virtual sound in response to a user's action. For instance, when a user initiates a right command with a toggle switch, sound associated from an image from the right side will appear to go from the right of the user to the user; thus, confirming the user's right command.

Figure 2B is a diagram of an audio-enhanced user interface 220 with items positioned in a horizontal sliding format. User interface 220 includes multiple items 104 associated with a listing arranged horizontally within window 102. It will be appreciated by those skilled in the art that items 104 could be arranged in any manner to facilitate browsing efficiency. For instance, items 104 can be arranged in a vertical sliding format. Any size or portion of items associated with the listing may be displayed in window 102.

A focus area 106 is position at the centre of window 102. Focus area 106 identifies the item that is the current selection. Input device 108 (e.g., toggle switch) is operable to control the sliding of items in and out of focus area 226 and to select items for browsing (e.g., audio or video playback). For example, if input device 108 initiates a right command, the entire field of items will shift left with the item immediately adjacent to the right of the focus area being identified by a visual cue 107, automatically selected (new current selection), and having sound associated with this item appear to move from the right to centre. For another example, upon initiation of the right command, a visual cue 107 highlighting the right item may be manually selected via input device 108 (e.g., centre button on toggle switch) by user. After selecting the right item, sound associated this item again appears to move from the right to centre. In either example, the entire field of items will shift left. The number of positions the entire field of items shift may depend on the number of right commands initiated and/or where the visual cue is positioned when selection is made. The selection can be configured for any browsing purpose including, but not limited to, accessing, playing, or viewing corresponding selected items.

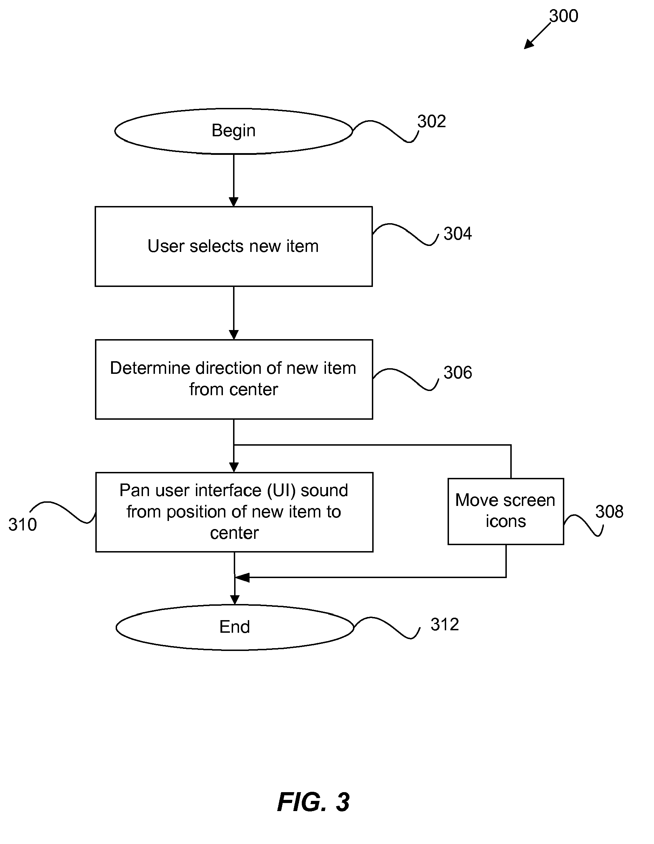

Figure 3 is a flow diagram 300 of browsing with an audio-enhanced user interface. Flow diagram 300 begins at operation 302 where the audio-enhanced user interface is provided to a user for browsing multiple items associated with a listing. At operation 304, the user selects a new item from the multiple items displayed in a window of the audio-enhanced user interface. The selection may be performed using any available technique. For example, the selection can be automatically executed by mere movement/engagement of a visual cue over/with the new item. The visual cue can be controlled by an input device (e.g., selector switch, toggle switch, keyboard, mouse, etc.) operable by the user.

Next, at operation 306, the direction of the new item from the focus area is determined. In general, the focus area is positioned at the centre of the window of the audio-enhanced user interface. The direction of the new item from the focus area can be facing any direction in space according to any multi-axis system (e.g., 2D, 3D). For example, the direction can be from the front, behind, left, right, above, or below. Any applicable algorithm may be used for determining the direction in operation 306.

Next, the user interface sound is panned from the position of the new item to the focus area at operation 310. Any technique may be implemented to covey movement of the user selected item. According to a preferred embodiment, 3D audio is used for placing a corresponding audio clip of the selected item in virtual space. Alternatively, stereo or multi-channel panning can be implemented in operation 310. In some embodiments, corresponding audio clips of other items can be placed in virtual space too. For example, an audio clip of an item already identified by the focus area (e.g., currently selected item) can be simultaneously placed in virtual space with the audio clip of the new item (new currently selected item) such that it appears to the user that the item already identified by the focus area is fading away from the focus area and the new item is fading towards the focus area.

At operation 308, the screen icons move. In a preferred embodiment, the new item moves to the focus area. If the focus area already identifies another item, that item can move away from the focus area as the new item moves towards inside the focus area. Further, the rest of the items may move in accordance with the new item. For instance, the rest of the items may move together with the new item in unison (e.g., timing, arrangement, etc.) and maintain their relative spacing individually or as a group. Alternatively, some or all of the items may remain static and the focus may move depending on the desired visual effect of the audio-enhanced user interface.

In general, operations 310 and 308 are coordinated with each other so as to provide the maximum browsing reinforcement to the user. For instance, by combining 3D audio with visual movement of the item(s), the user's selection is reinforced and/or confirmed. Thus, the user experience is enhanced. In a preferred embodiment, operations 310 and 308 are performed simultaneously. Finally, flow diagram 300 ends at operation 312. It will be appreciated by those skilled in the art that flow diagram 300 can be repeated as many times as necessary.

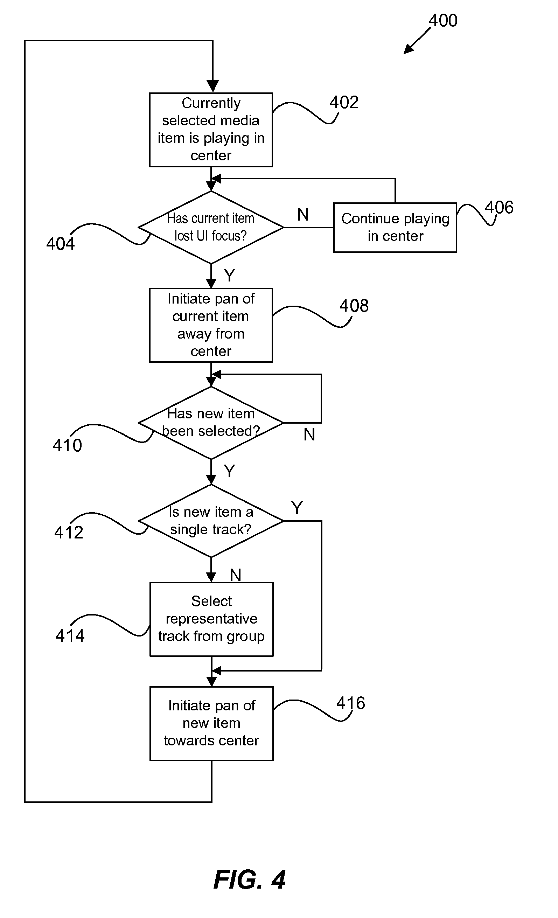

Figure 4 is a flow diagram 400 of playing media with an audio-enhanced user interface. At operation 402, a currently selected media item identified by a focus area is playing. According to various embodiments, the focus area is positioned at the centre of a window of the audio-enhanced user interface. In general, the focus area or centre of the window is representative of the user's position in a surrounding (e.g., room, area, space). Further, the currently selected item plays by positioning a corresponding audio clip in virtual space (relative to a reference point). The reference point may be the position of the focus area, the user, or any other position within or outside the user interface to maximize the virtual sound effect and user browsing experience. In general, 3D positional audio is used to playback any portion of the corresponding audio clip in virtual space. The original audio clip is manipulated (e.g., via digital signal processing techniques) to produce 3D audio such that the sound gives the appearance that it is coming from a particular direction. The 3D audio effect may be increased above that normally used in various ways to make the effect more noticeable. This includes increasing the inter-aural level difference, the inter-aural delay or the early reflections level.

At operation 404, a determination is made as to whether the current item has lost user interface (UI) focus. The determination can be made using any technique that identifies whether the current item is unwanted or being changed. For example, if the current item is moving away from the focus area, then the current item is being changed and has lost user interface focus. For another example, if a new item has been selected, then the current item is no longer wanted and has lost user interface focus. If the current item has not lost user interface focus, then the current item identified by the focus area continues to play in operation 406 and returns to operation 404. However, if the current item has lost user interface focus, then a pan of the current item is initiated away from the focus area in operation 408. 2D, 3D, or multi-channel panning techniques may be used to perform operation 408.

Next, a determination as to whether a new item has been selected is performed at operation 410. Generally, selection of the new item is coupled with the current item losing UI focus. If no new item has been selected, then operation 410 is repeated. If a new item has been selected, then a determination as to whether the new selected item is a single track is performed in operation 412. If the new selected item is not a single track (e.g., a group of multiple tracks), then a representative track from the group is selected in operation 414 and the flow diagram 400 continues to operation 416. The representative track can be of any portion/length, selected randomly from the group, or defined by any selection algorithm (e.g., most popular track from the group). Operation 416 is then performed either using the track (if the new item is a track), or using the representative track (if the new item is a group). In operation 416, a pan of the new selected item towards the focus area is initiated. Once the panning has been completed, flow diagram 400 loops back to operation 402 where the new selected item is now the currently selected item and is played. The playing of the single track or representative track can include a process for deciding which part of the single track or representative track to play. The beginning of a track or representative track is usually quiet, so the process may include selecting a representative passage from the track or representative track to play. Methods of doing this might include randomly choosing a section in the middle of the track, scanning for a repeated section (e.g., chorus of a pop song) and using it, or choosing to play from the beginning of the track.

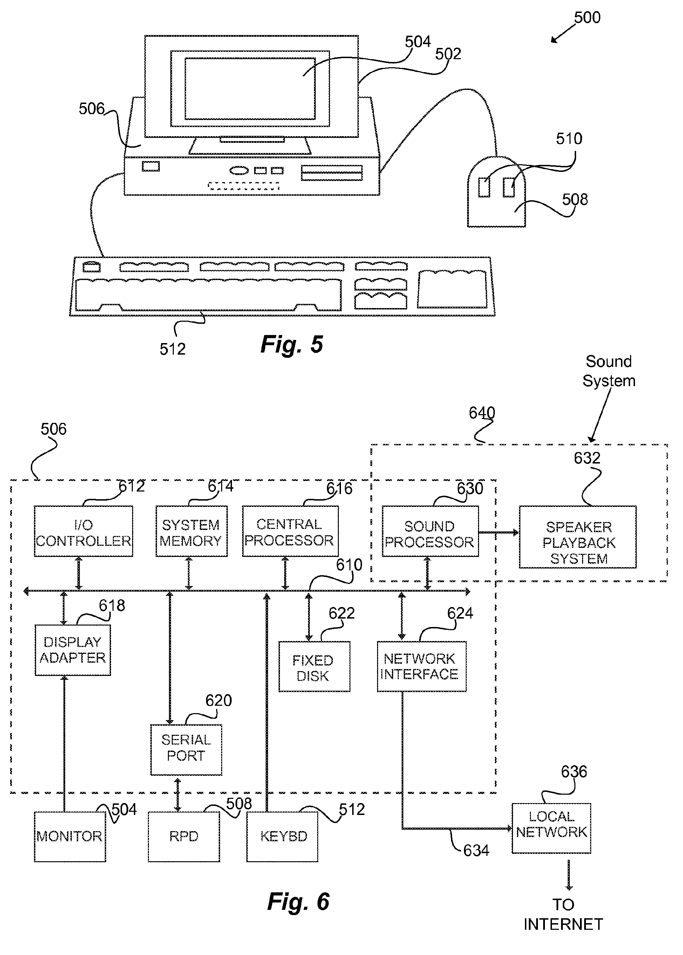

Figure 5 illustrates a system 500 suitable for use to implement the audio-enhanced user interface. System 500 generally includes display 502 having display screen 504. Cabinet 506 houses computer components (not shown) such as a disk drive, CDROM drive, display adapter, network card, random access memory (RAM), central processing unit (CPU), and other components, subsystems and devices. User input devices such as a mouse 508 having buttons 510, and a keyboard 512 are shown. Other user input devices such as a trackball, touch-screen, digitizing tablet, etc. can be used. In general, system 500 is illustrative of one type of system, such as a desktop computer, suitable for use with the present invention. Computers can be configured with many different hardware components and can be made in many dimensions and styles (e.g., laptop, palmtop, server, workstation, mainframe). Thus, any hardware platform (including portable electronic devices such as media players, cell phones, PDAs, etc.) suitable for performing the processing described herein is suitable for use with the present invention.

Figure 6 illustrate some subsystems found in system 500. Subsystems within box 506 are directly interfaced to an internal bus 610. The subsystems include input/output (I/O) controller 612, System Random Access Memory (RAM) 614, Central Processing Unit (CPU) 616, Display Adapter 618, Serial Port 620, Fixed Disk 622, Network Interface Adapter 624 and Sound Processor 630. The use of the bus 610 allows each of the subsystems to transfer data among the subsystems and, most importantly, with the CPU 616. External devices can communicate with the CPU or other subsystems via the bus 610 by interfacing with a subsystem on the bus. Monitor 504 connects to the bus through Display Adapter 618. A relative pointing device (RPD) such as a mouse 508 connects through Serial Port 620. Also shown is a Speaker Playback System 632 (e.g., stereo headphones, multi-channel loudspeakers), which receives sound signals from the Sound Processor 630 to acoustically reproduce the sound signals for user enjoyment. In the embodiment illustrated on Figure 6, the union of the Sound Processor 630 and the Speaker Playback System 632 form the Sound System 640.

Figure 6 is illustrative of one suitable configuration for providing an audio-enhanced user interface. Subsystem, components or devices other than those shown in Figure 6 can be added without deviating from the scope of the invention. A suitable system can also be achieved without using all of the subsystems shown in Figure 6. Other subsystems such as a CDROM drive, graphics accelerator, etc. can be included in the configuration without affecting the performance of the audio-enhanced user interface.

The invention is related to the use of apparatus, such as system 500, for providing an audio-enhanced user interface. The audio-enhanced user interface may be provided by system 500 in response to processor 616 executing one or more sequences of one or more instructions contained in system memory 614. Such instructions may be read into memory 614 from another computer-readable medium, such as fixed disk 622. Execution of the sequences of instructions contained in memory 614 causes processor 616 to perform the process steps described herein. One or more processors in a multiprocessing arrangement may also be employed to execute the sequences of instructions contained in memory 614. In alternative embodiments, hard-wired circuitry may be used in place of or in combination with software instructions. Thus, embodiments of the invention are not limited to any specific combination of hardware circuitry and software.

The term "computer-readable medium" as used herein refers to any medium that participates in providing instructions to processor 616 for execution. Such a medium may take many forms, including, but not limited to, non-volatile media, volatile media, and transmission media. Non-volatile media include, for example, optical or magnetic disks, such as fixed disk 622. Volatile media include dynamic memory, such as memory 614. Transmission media include coaxial cables, copper wire, and fiber optics, including the wires that comprise bus 610. Transmission media can also take the form of acoustic or light waves, such as those generated during radio frequency (RF) and infrared (IR) data communications. Common forms of computer-readable media include, for example, floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH-EPROM, any other memory chip or cartridge, a carrier wave as described hereinafter, or any other medium from which a computer can read.

Various forms of computer-readable media may be involved in carrying one or more sequences of one or more instructions to processor 616 for execution. For example, the instructions may initially be borne on a magnetic disk of a remote computer. The remote computer can load the instructions into its dynamic memory and send the instructions over a telephone line using a modem. A modem local to system 500 can receive the data on the telephone line and use an infrared transmitter to convert the data to an infrared signal. An infrared detector coupled to bus 610 can receive the data carried in the infrared signal and place the data on bus 610. Bus 610 carries the data to memory 614, from which processor 616 retrieves and executes the instructions. The instructions received by memory 614 may optionally be stored on fixed disk 622 either before or after execution by processor 616.

System 500 also includes a communication interface 624 coupled to bus 610. Communication interface 624 provides a two-way data communication coupling to a network link 634 that is connected to a local network 636. For example, communication interface 624 may be an integrated services digital network (ISDN) card or a modem to provide a data communication connection to a corresponding type of telephone line. As another example, communication interface 624 may be a local area network (LAN) card to provide a data communication connection to a compatible LAN. Wireless links may also be implemented. In any such implementation, communication interface 624 sends and receives electrical, electromagnetic, or optical signals that carry digital data streams representing various type of information.

Network link 634 typically provides data communication through one or more networks to other data devices. For example, network link 634 may provide a connection through local network 636 to a host computer or to data equipment operated by an Internet Service Provider (ISP). The ISP in turn provides data communication services through the worldwide packet data communication network, now commonly referred to as the "Internet". Local network 636 and the Internet both use electrical, electromagnetic, or optical signals that carry digital data streams. The signals through the various networks and the signals on network link 634 and through communication interface 624, which carry the digital data to and from system 500, are exemplary forms of carrier waves transporting the information.

System 500 can send messages and receive data, including program codes through the network(s), network link 634, and communication interface 624. In the Internet example, a server might transmit a requested code for an application program through Internet, ISP, local network 636, and communication interface 624. One such downloaded application may provide for an audio-enhanced user interface as described herein. The received code may be executed by processor 616 as it is received, and/or stored on fixed disk 622, or other non-volatile storage for later execution. In this manner, system 500 may obtain an application code in the form of a carrier wave.

The systems described above may be used in conjunction with user interfaces with visualization for music albums such as CoverFlow, which is available from Apple Inc. located in Cupertino, CA., and Cooliris (formally known as PicLens), which is available from Cooliris, Inc. located in Palo Alto, CA. As will be appreciated by those skilled in the art, the system may be employed with user interfaces having any potential arrangement of items and displayed in any available fashion including surrounding the user in a sphere.

In CoverFlow, the currently selected album art appears facing towards the user in the middle, and the rest of the collection appears as two stacks of albums which are inclined at an angle to the user on either side. The user may click on either of the two stacks or move a slider to select a new album. The currently selected album then changes and the covers "flow" across from right to left or left to right. According to various embodiments of the present invention, a track from the new album would be played as the change takes place, and the position from which the track appears to be being played would correspond to the movement of the new album cover from left or right to the centre. By using spatial audio techniques, movement of the new album cover image can be conveyed over to the user in confirming his selection. Since aspects of the present invention allow more information to be delivered to a user by augmenting 3D audio effects with the visual images, user interfaces where displayed items are not completely visible (e.g., album art in CoverFlow that is displayed at an angle) to the user can be greatly improved.

Although the foregoing invention has been described in some detail for purposes of clarity of understanding, it will be apparent that certain changes and modifications may be practiced within the scope of the appended claims. For example, it will be appreciated by those skilled in the art that the embodiments of the present invention can be applied to any user interface with graphical icons or images. Accordingly, the present embodiments are to be considered as illustrative and not restrictive, and the invention is not to be limited to the details given herein, but may be modified within the scope and equivalents of the appended claims.

## Claims

1. A system for browsing a plurality of items associated with a listing, the system comprising:
a display;
a plurality of speakers;
an input device operable by a user;
memory; and
a processor coupled to the display, the plurality of speakers, the input device, and the memory, the processor operable to:
identify with a focus area within a window on the display a first item from the plurality of items as a current selection;
identify with a visual cue within the window on the display a second item from the plurality of items as a new current selection; and
upon identification of the new current selection, cause the first item to move away from the focus area and the second item to move towards the focus area, wherein the movement of the second item is accompanied by placement of a corresponding audio clip in virtual space via the plurality of speakers.

2. The system as recited in claim 1, wherein the movement of the first item is accompanied by placement of a corresponding audio clip in virtual space via the plurality of speakers.

3. The system as recited in claim 1 or 2, wherein the placement of the corresponding audio clip for the second item in virtual space is by either stereo or multi-channel panning, or by 3D audio.

4. The system as recited in claim 1, 2 or 3, wherein the system is implemented in a media player for music browsing.

5. The system as recited in any preceding claim, wherein the focus area is fixedly positioned at a centre position within the window on the display.

6. The system as recited in any preceding claim, wherein the plurality of items is positioned either only horizontally or only vertically or both horizontally and vertically within the window on the display, and/or in a 3D format.

7. The system as recited in any preceding claim, wherein at least one of the plurality of items is partially visible within the window on the display.

8. The system as recited in any preceding claim, wherein the visual cue is operable to move to any particular item of the plurality of items and facilitate selection of the particular item of the plurality of items as the new current selection, the movement of the visual cue being controllable via the input device.

9. A method for browsing a plurality of items associated with a listing, the plurality of items being positioned on a display, the method comprising:
identifying with a focus area on the display a first item from the plurality of items as a current selection;
identifying with a visual cue on the display a second item from the plurality of items as a new current selection; and
upon identifying the new current selection, placing a corresponding audio clip of the second item in virtual space.

10. The method as recited in claim 9, further comprising, upon identifying the new current selection, moving away the first item from the focus area and moving the second item towards the focus area, wherein the moving of the second item is accompanied by placing the corresponding audio clip in virtual space.

11. The method as recited in claim 9 or 10, wherein the placing of the corresponding audio clip for the second item in virtual space is by 3D audio.

12. The method as recited in claim 9, 10 or 11, wherein identifying the current selection comprises determining whether the first item is in the focus area and/or identifying the new current selection comprises determining whether the second item has been selected.

13. The method as recited in any of claims 9 to 12, the method further comprising:
upon identifying the new current selection, selecting the corresponding audio clip for the second item;
wherein the second item comprises a plurality of sub-items; and
wherein the corresponding audio clip for the second item is representative of the plurality of sub-items.

14. The method as recited in any of claims 9 to 13, wherein the plurality of items are audio items and the corresponding audio clip is a portion from either a single track or a representative track of the second item, the method further comprising:
selecting randomly the portion from the middle of the single track or the representative track; or
selecting the portion from the beginning of the single track or the representative track; or
scanning the single track or the representative track for a repeated section and selecting the portion as the repeated section.

15. The method as recited in any of claims 9 to 14, wherein the focus area is the same as the visual cue and operable to move among the plurality of items.
